# EUROPEAN PATENT APPLICATION

(11) **EP 2 922 070 A1**
(43) Date of publication of application: **23.09.2015**
(21) Application number: 14160672.3
(22) Date of filing: 19.03.2014
(51) Int. Cl.: H01F 5/04, H01F 27/28, H01F 27/32

(54) **Electrical insulation system and high voltage electromagnetic induction device comprising the same**

(71) Applicant: ABB Technology Ltd, 8050 Zürich (CH)
(72) Inventor: Edling, Andreas, SE-771 41 LUDVIKA (SE); Strömberg, Glenn, SE-771 43 LUDVIKA (SE); Walberg, Kjell, SE-771 43 LUDVIKA (SE); Blomberg, Ronnie, SE-771 42 LUDVIKA (SE)
(74) Representative: Savela, Reino Aleksi

(57) **Abstract**

The present disclosure relates to an electrical insulation system (ii) for a high voltage electromagnetic induction device. The electrical insulation system (11) comprises a first tubular electrode (11a) arranged to receive a conductor, which first tubular electrode (11a) defines a first axis, a second tubular electrode (11b) arranged to receive a conductor, which second tubular electrode (11b) defines a second axis, a tubular fitting member (11c) for fitting the first tubular electrode (11a) with the second tubular electrode (11b) thereby aligning the first axis with the second axis, and a solid insulation arrangement (13) configured to enclose the first tubular electrode (11a), the second tubular electrode (11b) and the tubular joint member (11c). A high voltage electromagnetic induction device comprising such an electrical insulation system is also disclosed herein.

## Description

### TECHNICAL FIELD

The present disclosure generally relates to high voltage electromagnetic induction devices. In particular it relates to an electrical insulation system and to a high voltage electromagnetic induction device comprising such an electrical insulation system.

### BACKGROUND

High voltage electromagnetic induction devices, such as power transformers and reactors, have large electrical insulation systems arranged to electrically insulate electrically conducting parts from parts having a different electrical potential. The higher the voltages, the larger electrical insulations systems are required in order to, among other things, be able to provide necessary creepage distances for safe operation.

For lower voltages, space has typically always been available to accommodate the electrical insulation system. The electrical insulation system could therefore be manufactured with large tolerances between the parts that were assembled and which formed the electrical insulation system.

For very high voltages, i.e. voltages at and above 800 kV, the electrical insulation system becomes so large that handling becomes problematic for example during transport and assembly of the high voltage electromagnetic induction device both because of the size of the parts of the device and because of the size of the device itself.

### SUMMARY

In view of the above, an object of the present disclosure is to provide an electrical insulation system which has a reduced size compared to what has previously been possible and which is simple to assemble and disassemble.

Hence, according to a first aspect of the present disclosure there is provided an electrical insulation system for a high voltage electromagnetic induction device, wherein the electrical insulation system comprises: a first tubular electrode arranged to receive a conductor, which first tubular electrode defines a first axis, a second tubular electrode arranged to receive a conductor, which second tubular electrode defines a second axis, a tubular fitting member for fitting the first tubular electrode with the second tubular electrode thereby aligning the first axis with the second axis, and a solid insulation arrangement configured to enclose the first tubular electrode, the second tubular electrode and the tubular joint member.

An effect which may be obtainable due to alignment of the first tubular electrode and the second tubular electrode by means of the tubular fitting member, is that the electrical insulation system may be made smaller because tolerances between the components of the solid insulation arrangement may be made considerable less, in the order of 2 mm, than what has been previously possible. Moreover, the joint formed by the first tubular electrode, the second tubular electrode and the tubular fitting member can easily repeatedly be assembled and disassembled, without needing direct access to the joint. The electrical insulation system may thus be disassembled for transport to reduce size and weight and the assembly process can be simplified.

According to one embodiment the solid insulation arrangement comprises a first insulation structure arranged to mainly enclose the first tubular electrode.

According to one embodiment the solid insulation arrangement comprises a second insulation structure arranged to mainly enclose the second tubular electrode.

According to one embodiment the first insulation structure is arranged to overlap the second insulation structure.

According to one embodiment the solid insulation arrangement comprises a plurality of concentrically arranged cylindrical insulation barriers arranged to enclose the first insulation structure and the second insulation structure.

One embodiment comprises a shield ring arranged to enclose the tubular fitting member.

According to one embodiment the tubular fitting member has an external surface having a shoulder arranged to bear against the shield ring.

According to one embodiment the tubular fitting member has at least one end which has a diameter which is smaller than or corresponds to an inner diameter of the second tubular electrode to enable insertion of the tubular fitting member into the second tubular electrode.

According to one embodiment the tubular fitting member comprises at least one threaded end, and wherein at least one of the first tubular electrode and the second tubular electrode comprises corresponding threads.

According to one embodiment the tubular fitting member is welded to the first tubular electrode.

According to one embodiment the tubular fitting member has a tapering inner portion tapering in a direction towards the second tubular electrode.

According to one embodiment the second tubular electrode has a tapering inner portion tapering in a direction towards the first tubular electrode.

According to one embodiment the first tubular electrode, the second tubular electrode and the tubular fitting member are made of aluminium. Beneficially, the electrical insulation system may be utilised in a high voltage electromagnetic induction device. Thus, according to a second aspect of the present disclosure there is provided a high voltage electromagnetic induction device comprising an electrical insulation system according to the first aspect presented herein.

According to one embodiment the high voltage electromagnetic induction device is a power transformer or a reactor.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1a is a schematic side view of a high voltage electromagnetic induction device;
Fig. 1b is a schematic side view of the high voltage electromagnetic induction device with the tank removed in order to expose the high voltage electromagnetic induction device interior;
Fig. 2a is a close-up of a portion of the high voltage electromagnetic induction device in Fig. 1b with a portion of the turret removed to expose an electrical insulation system;
Fig. 2b depicts a section of electrical insulation including the electrical insulation system in Fig. 2a;
Fig. 2c depicts a section of the electrical insulation system in Fig. 2b; and
Fig. 3 shows a perspective view of a tubular fitting member of the electrical insulation system in Fig. 2c.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

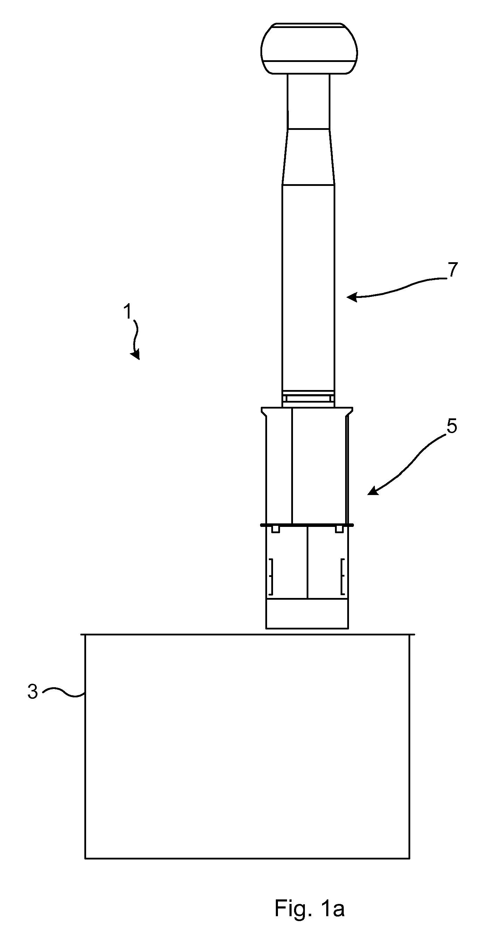

Fig. 1a depicts a schematic side view of an example of a high voltage electromagnetic induction device 1 comprising a tank 3 which encloses an electromagnetic core and windings wound around the electromagnetic core. The high voltage electromagnetic induction device 1 may for example be a high voltage power transformer or a reactor. The electromagnetic induction device 1 may be a high voltage direct current (HVDC) device or a high voltage alternating current (HVAC) device. The high voltage electromagnetic induction device 1 further comprises a turret 5 attached to the tank 3 and a bushing 7 partially received by the turret 5.

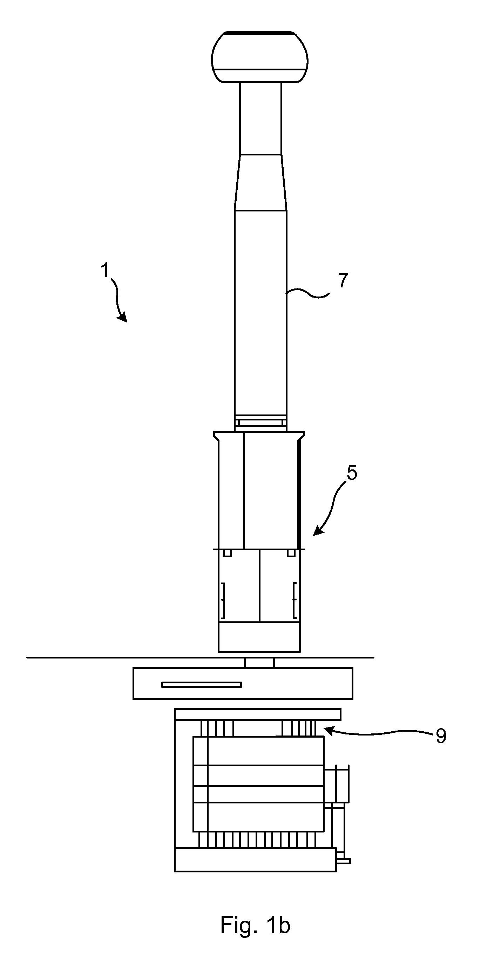

Fig. 1b depicts a schematic side view of the high voltage electromagnetic device 1 with the tank 3 removed to expose the interior components of the high voltage electromagnetic device 1. Among other things visible is a winding insulation system 9 arranged to electrically insulate the windings, and arranged around the electromagnetic core. The winding insulation system 9 has a central axis extending in a direction parallel to an axis defined by the longitudinal extension of the bushing 7. The winding insulation system 9 typically comprises a plurality of concentrically arranged cylindrical insulation barriers, and sticks and spacers separating the turns of the winding. The winding insulation system 9 may be immersed in a dielectric fluid such as oil or an ester.

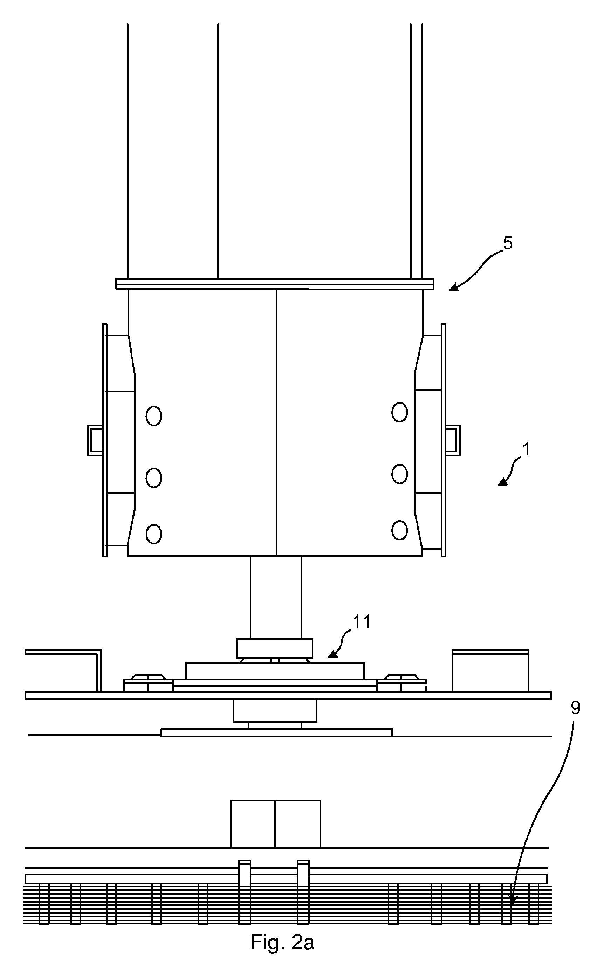

Fig. 2a shows a closed-up portion of the high voltage electromagnetic induction device 1 with the tank 3 and a portion of the turret 5 removed in order to expose an electrical insulation system 11. The high voltage electromagnetic induction device 1 thus comprises the electrical insulation system 11 arranged to electrically insulate a conductor extending through an opening in the tank 3. This is an area subjected to high electric stress, due to the electric potential difference between the tank and the conductor.

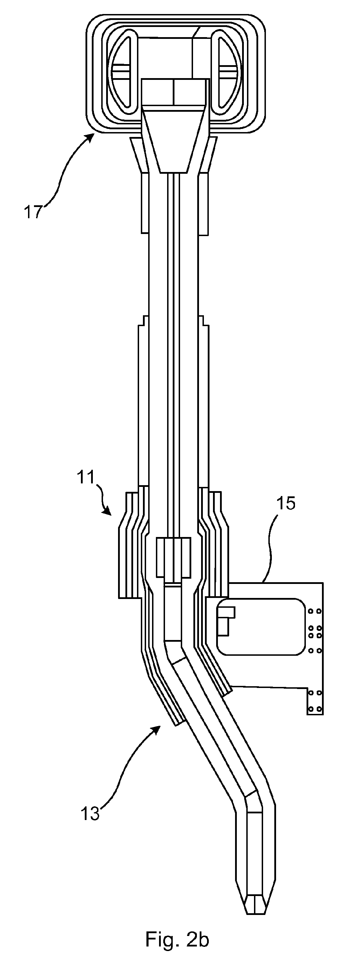

Fig. 2b shows a section of the electrical insulation system 11. The electrical insulation system 11 is arranged to be attached to a structure (not shown) within the tank 3. The electrical insulation system 11 hence has an attachment means 15 for attaching it to the structure. The upper end of the electrical insulation system 11 is provided with a shield ring 17 comprising electrodes, and arranged to shield a connection between a winding conductor and the conductor extending through the bushing 7 inside the turret 5.

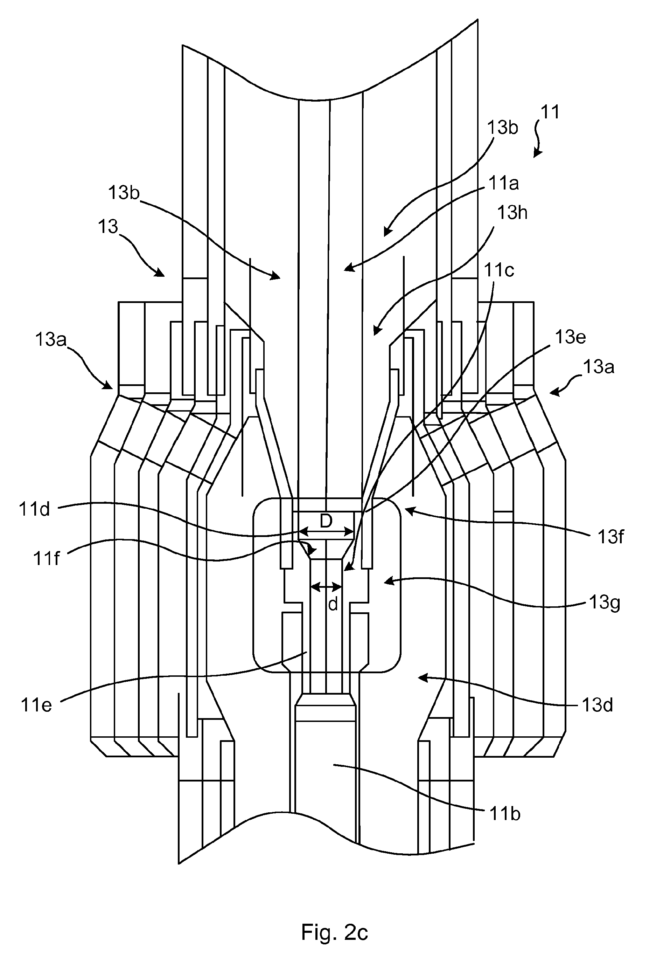

Fig. 2c depicts a close-up view of a joint portion of the electrical insulation system 11 shown in Fig. 2b. The electrical insulation system 11 may be immersed in a dielectric fluid such as oil or an ester when mounted inside a high voltage electromagnetic induction device. The electrical insulation system 11 comprises a first tubular electrode 11a and a second tubular electrode 11b. The first tubular electrode 11a defines a first axis, and is arranged to receive a conductor such as a winding conductor. The second tubular electrode 11b defines a second axis, and is arranged to receive a conductor such as a winding conductor. The first tubular electrode 11a and the second tubular electrode 11b are made of electrically conducting material, such as metal, preferably aluminium.

The electrical insulation system 11 further comprises a tubular fitting member 11c. The tubular fitting member 11c can also be seen as an electrode, as it in a typical variation is made of a conducting material such as metal, preferably aluminium. The tubular fitting member 11c is arranged to couple the first tubular electrode 11a to the second tubular electrode 11b. The tubular fitting member 11c hence functions as a joint arranged to interconnect the first tubular electrode 11a with the second tubular electrode 11b. When assembled, the first tubular electrode 11a, the second tubular electrode 11b and the tubular fitting member 11c hence define a continuous electrode in the axial direction, arranged to surround a conductor extending through these tubular components.

The tubular fitting member 11c is adapted to align the first tubular electrode 11a with the second tubular electrode 11b such that the first axis is aligned with the second axis. Alignment may be achieved in a plurality of ways, but one advantageous manner to obtain alignment which does not necessitate direct access to the joint when assembling the first tubular electrode 11a with the second tubular electrode 11b is to fasten the tubular fitting member 11c to one of the first tubular electrode 11a and the second tubular electrode 11b before commencement of assembly or disassembly of the first tubular electrode 11a and the second tubular electrode 11b. One end of the tubular fitting member 11c may hence be permanently fastened to one of the first tubular electrode 11a and the second tubular electrode 11b, for example by means of welding. According to this variation, the tubular fitting member 11c is hence permanently fixated to one of the first tubular electrode 11a and the second tubular electrode 11b. The free end of the tubular fitting member 11c is in this case adapted to be received by that tubular electrode 11a, 11b which is not fixated to the tubular fitting member 11c. Another example to achieve alignment would be to provide a tubular fitting member which has both ends free, a first end being adapted to be received by the first tubular electrode and the second end opposite the first end being adapted to be received by the second tubular electrode.

According to the variation shown in Fig. 2c, the tubular fitting member 11c has a first end portion 11d. The first end portion 11d is permanently attached to the first tubular electrode 11a for example by means of welding. The tubular fitting member 11c has a second end portion 11e opposite the first end portion 11d, arranged to be mechanically coupled to an end portion of the second tubular electrode 11b. According to the variation depicted in Fig. 2c, the external diameter of the second end portion 11e of the tubular fitting member 11c is smaller than or corresponds to the inner diameter of the second tubular electrode 11b and can thereby be received by the second tubular electrode 11b. The external surface of the second end portion 11e may for example be threaded, and the internal surface of the second tubular electrode 11b may have corresponding threads. Other variations are of course also possible; the second end portion 11e and the second tubular electrode 11b may for example have a sliding fit. Moreover, the roles of the first tubular electrode 11a and the second tubular electrode 11b may according to one variation be interchanged such that the second tubular electrode is welded to the tubular fitting member.

The electrical insulation system 11 comprises a solid insulation arrangement 13 configured to enclose and electrically insulate the first tubular electrode 11a, the second tubular electrode 11b, and the tubular fitting member 11c. The solid insulation arrangement 13 is especially arranged to enclose portions of the peripheral surfaces of the first tubular electrode 11a, the second tubular electrode 11b, and the tubular fitting member 11c.

The solid insulation arrangement 13 may comprise a plurality of concentrically arranged insulation barriers 13a, typically cylindrical insulation barriers. Furthermore, the solid insulation arrangement 13 comprises a first insulation structure 13c and a second insulation structure 13d. The first insulating structure 13c is arranged to enclose the first tubular electrode 11a. The first insulation structure 13c is arranged between the first tubular electrode 11a and the insulation barriers 13a. The second insulation structure 13d is arranged to enclose the second tubular electrode 11b. The second insulation structure 13d is configured to be arranged between the second tubular electrode 11b and the insulation barriers 13a.

Each of the first insulation structure 13c and the second insulation structure 13d may be rotationally symmetric to provide uniform electrical insulation in any radial direction. Furthermore, the first insulation structure 13c may have a tapering end portion 13h. When the electrical insulation system 11 is in an assembled state, the tapering end portion 13h is tapering in a direction from the first tubular electrode 11a towards the second tubular electrode 11b. The second insulation structure 13d may have a tapering end portion 13f. When the electrical insulation system 11 is in an assembled state, the tapering end portion 13f is tapering from the second tubular electrode 11b towards the first tubular electrode 11a.

According to one variation the tapering end portion 13h of the first insulation structure 13c overlaps the tapering end portion 13f of the second insulation structure 13d. The tapering end portion 13f of the second insulation structure 13d may for example enclose the tapering portion 13h of the first insulation structure 13c. In order to obtain as small gap as possible between the tapering end portions 13h, 13f the tapering end portion 13f of the second insulation structure 13d may be conical such that the inner surface of the tapering end portion 13f is parallel to the external surface of the tapering end portion 3h of the first insulation structure 13c.

The insulation barriers 13a, the first insulation structure 13c and the second insulation structure 13d may for example be made of a cellulose-based material, such as electrical insulation paper.

The electrical insulation system 11 may further comprise a shield ring 13g arranged to enclose the joint formed by the connection of the first tubular electrode 11a and the second tubular electrode 11b by means of the tubular fitting member 11c. When the electrical insulation system 11 is in an assembled state, the shield ring 13g may hence enclose an end portion of the first tubular electrode 11a, and end portion of the second tubular electrode 11b, and the tubular fitting member 11c.

The second insulation structure 13d is according to one variation adapted to receive the shield ring 13g, and therefore has a cut-out along the periphery of its inner surface, the cut-out being dimensioned to accommodate the shield ring 13g. The shield ring 13g may comprise a cellulose-based material, and optionally also an electrode.

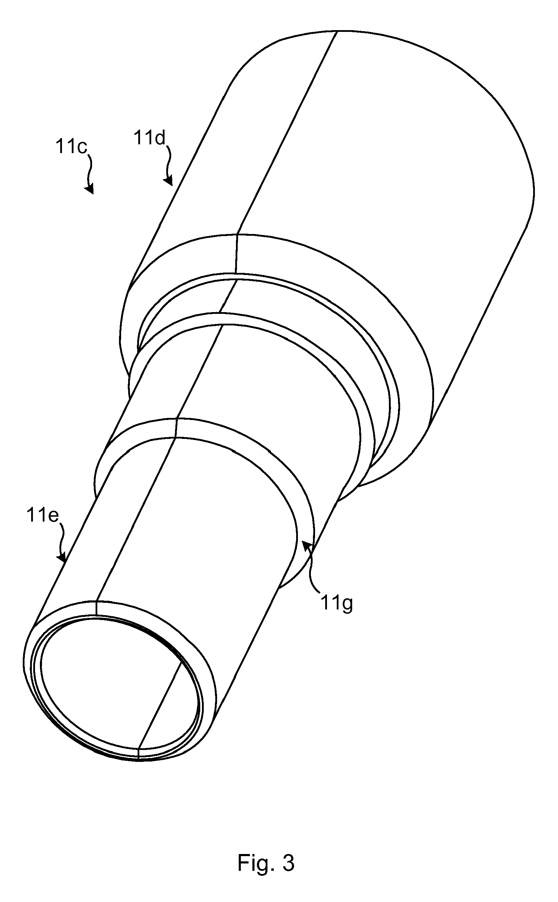

Fig. 3 depicts an example of a tubular fitting member 11c arranged to receive a conductor. The tubular fitting member 11c may be rotationally symmetric. The first end portion 11d may according to one variation have a tapering inner surface 11f, as shown in Fig. 2c. An inner diameter of the tubular fitting member 11c may thereby decrease from a first inner diameter D at its end which faces the first tubular electrode 11a and which essentially corresponds to an inner diameter of the first tubular electrode 11a to a second inner diameter d which corresponds essentially to an inner diameter of the second tubular electrode 11b at a location where the tubular fitting member 11c terminates in the second tubular electrode 11b. The inner surface of the tubular fitting member 11c thus has a tapering inner portion which tapers in a direction towards the second tubular electrode 11b when the electrical insulation system 11 is in an assembled state.

The second tubular electrode 11b may have a tapering inner portion tapering towards the tubular fitting member 11c and the first tubular electrode 11a, to obtain a diameter essentially corresponding to the second inner diameter d of the tubular fitting member 11c. The inner diameter of the electrical insulation system 11 hence gradually increases and decreases to correspond to the second inner diameter d of the tubular fitting member 11c.

The tubular fitting member 11c may according to one variation have an external surface which defines a shoulder 11g that is arranged to bear against the shield ring 13g to support the tubular fitting member 11c.

By means of the tubular fitting member 11c it is possible to align the first tubular electrode 11a and the second tubular electrode 11b in a simple manner, without the need of direct access to the joint formed by the first tubular electrode 11a and the second tubular electrode 11b when assembling the electrical insulation system 11. Furthermore, a continuous electrode structure throughout the electrical insulation system is obtained by means of the tubular fitting member. Moreover, due to the exact alignment, tolerances of the solid insulation arrangement may be minimized, and may for example be in the range down to about 2 mm. The entire electrical insulation system may thus be made more compact while maintaining the required dielectric properties, and which enables simple assembly and disassembly of the electric insulation system for example during transportation to the installation site.

It should be noted that the electrical insulation system presented herein may be utilised in other locations of a high voltage electromagnetic induction device than what has been exemplified herein. A typical example of a location of installation in a high voltage electromagnetic induction device would be at any joint between two adjacent housing parts, for example tank and cover.

It is envisaged that the electrical insulation system presented herein finds applications within AC and HVDC power transmission both onshore and offshore. In particular, the electrical insulation system may be utilised in HVDC or HVAC electromagnetic induction devices such as power transformers and reactors. Furthermore, the electrical insulation system may advantageously be used in applications having voltage levels equalling or being above 800 kV. It should however be noted that the electrical insulation system could also be used for any voltage lower than 800 kV, for example 100 kV-800 kV, since the design provides a less space-consuming electrical insulation system for any voltage level than a corresponding prior art solution.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An electrical insulation system (11) for a high voltage electromagnetic induction device (1), wherein the electrical insulation system (11) comprises:
a first tubular electrode (11a) arranged to receive a conductor, which first tubular electrode (11a) defines a first axis,
a second tubular electrode (11b) arranged to receive a conductor, which second tubular electrode (11b) defines a second axis,
a tubular fitting member (11c) for fitting the first tubular electrode (11a) with the second tubular electrode (11b) thereby aligning the first axis with the second axis, and
a solid insulation arrangement (13) configured to enclose the first tubular electrode (11a), the second tubular electrode (11b) and the tubular joint member (11c).

2. The electrical insulation system (11) as claimed in claim 1, wherein the solid insulation arrangement (13) comprises a first insulation structure (13c) arranged to mainly enclose the first tubular electrode (11a).

3. The electrical insulation system (11) as claimed in claim 2, wherein the solid insulation arrangement (13) comprises a second insulation structure (13d) arranged to mainly enclose the second tubular electrode (11b).

4. The electrical insulation system (11) as claimed in claim 3, wherein the first insulation structure (13c) is arranged to overlap the second insulation structure (13d).

5. The electrical insulation system (11) as claimed in claim 3 or 4, wherein the solid insulation arrangement (13) comprises a plurality of concentrically arranged cylindrical insulation barriers (13a) arranged to enclose the first insulation structure (13c) and the second insulation structure (13d).

6. The electrical insulation system (11) as claimed in any of the preceding claims, comprising a shield ring (13g) arranged to enclose the tubular fitting member (11c).

7. The electrical insulation system (11) as claimed in claim 6, wherein the tubular fitting member (11c) has an external surface having a shoulder arranged to bear against the shield ring.

8. The electrical insulation system (11) as claimed in any of the preceding claims, wherein the tubular fitting member (11c) has at least one end which has a diameter which is smaller than or corresponds to an inner diameter of the second tubular electrode (11b) to enable insertion of the tubular fitting member (11c) into the second tubular electrode (11b).

9. The electrical insulation system (11) as claimed in any of the preceding claims, wherein the tubular fitting member (11c) comprises at least one threaded end, and wherein at least one of the first tubular electrode (11a) and the second tubular electrode (11b) comprises corresponding threads.

10. The electrical insulation system (11) as claimed in any of the preceding claims, wherein the tubular fitting member (11c) is welded to the first tubular electrode (11a).

11. The electrical insulation system (11) as claimed in any of the preceding claims, wherein the tubular fitting member (11c) has a tapering inner portion (11f) tapering in a direction towards the second tubular electrode (11b).

12. The electrical insulation system (11) as claimed in any of the preceding claims, wherein the second tubular electrode (11b) has a tapering inner portion tapering in a direction towards the first tubular electrode (11a).

13. The electrical insulation system (11) as claimed in any of the preceding claims, wherein the first tubular electrode (11a), the second tubular electrode (11b) and the tubular fitting member (11c) are made of aluminium.

14. A high voltage electromagnetic induction device (1) comprising an electrical insulation system (11) as claimed in any of claims 1-13.

15. The high voltage electromagnetic induction device (1) as claimed in claim 13, wherein the high voltage electromagnetic induction device (1) is a power transformer or a reactor.
